# EUROPÄISCHE PATENTSCHRIFT

(11) **EP 2 583 541 B1**
(45) Veröffentlichungstag und Bekanntmachung des Hinweises auf die Patenterteilung: **08.03.2017**
(21) Anmeldenummer: 11405343.2
(22) Anmeldetag: 22.10.2011
(51) Int. Cl.: F16H 59/10, F16H 59/02, A01B 33/02, B62D 51/00

(54) **Selbstfahrende, wenigstens einachsig ausgebildete Arbeitsmaschine**
Self-propelled work machine with at least one axle
Machine de travail automobile dotée d'au moins un essieu

(43) Veröffentlichungstag der Anmeldung: 24.04.2013
(73) Patentinhaber: Rapid Technic AG, 8956 Killwangen (CH)
(72) Erfinder: Iten, Kilian, CH-6315 Alosen (CH)
(74) Vertreter: Fenner, Werner

(56) Entgegenhaltungen:
- EP-A1- 1 486 404
- EP-A1- 2 080 685
- DE-A1- 10 209 207
- DE-A1-102004 015 277
- DE-A1-102006 007 370
- DE-A1-102007 047 838
- DE-A1-102009 057 809
- JP-A- 62 198 561

## Beschreibung

Die Erfindung betrifft eine selbstfahrende, wenigstens einachsig ausgebildete Arbeitsmaschine zum Betreiben und/oder Fortbewegen von angebauten Arbeitsgeräten und/oder angehängten Fahrzeugen, welche Arbeitsmaschine eine mit einem Verbrennungsmotor antriebsverbundene, hydrostatische Antriebseinheit aufweist und vorzugsweise in eine Vorwärts- in eine Rückwärtsfortbewegungsrichtung schaltbar ist, und die zur manuellen Führung eine aus wenigstens einem, vorzugsweise aus zwei, jeweils einer Hand einer Bedienungsperson zugeordnete, letzterer zugewandte, an den freien Enden von auslegerartig angeordneten Lenkholmen einer Lenkanordnung befestigte Bedienungsgriffe aufweist, wobei die Lenkholme jeweils an den von den Bedienungsgriffen abgewandten Enden mit einem eine quer zur Fortbewegungsrichtung angeordnete Fahrachse aufweisenden Fahrgestell verbunden sind, **wobei** einer der mit dem Fahrgestell verbundenen Lenkholme im Auslegerbereich einen auf die bei der manuell lenkweisen Führung der Arbeitsmaschine an den Lenkholmen auftretenden Verformung ansprechenden Messwertnehmer aufweist, der zur Übertragung des gemessenen Verformungswertes mit einer einen Messwertgeber aufweisenden Steuervorrichtung zur Verstellung der Antriebseinheit zur Änderung der Fortbewegungsrichtung der Arbeitsmaschine verbunden ist, welche jeweils den Rädern zugeordnete Hydraulikmotoren und eine mit der Steuervorrichtung und letzteren durch ein Stellglied steuerbar verbundene Hydraulikpumpe aufweist.

Arbeitsmaschinen dieser Art lassen sich bekanntlich mit einem Verbrennungsmotor oder einem Elektromotor betreiben, und zu ihrer manuellen Lenkbarkeit resp. Führung ist wenigstens ein Lenkholm vorgesehen, der an dem der Bedienungsperson zugewandten Ende mit einem Bedienungsgriff ausgebildet ist, wobei einer elektromechanisch betriebenen Maschine eine einfache mechanische Antriebseinheit oder eine Antriebseinheit mit Elektro-Radnaben-Motoren zugeordnet sein können. Arbeitsmaschinen der eingangs beschriebenen Art werden sowohl in der Landtechnik, dem Landschafts- und Gartenbau, in kommunalen Betrieben und zum Transport wie auch in der Forstwirtschaft eingesetzt.

Sie eignen sich besonders in ebenem wie auch in unebenem Gelände zum Mähen, von Halmgut, zur Bodenbearbeitung und zur Räumung von Schnee, oder als Zugfahrzeug eines Anhängers resp. eines Treibachsanhängers. Zum Antrieb der angebauten Geräte wie Mähwerke oder Mähbalken, Heuwerbungs- oder Bodenbearbeitungsgeräte, Schneefräsen und -pflüge sowie Anhänger ist eine Zapfwelle vorgesehen, die mit einer Abtriebswelle des Verbrennungsmotors oder einer Antriebseinheit verbunden resp. gekuppelt ist, mit denen eine Hydraulikpumpe und Hydraulikmotoren für den Antrieb der Fahrachse der Arbeitsmaschine antriebsverbunden sind.

Die Antriebseinheit kann durch ein mechanisches Getriebe, Verzahnungs- und/oder Riemengetriebe ausgebildet und mit dem Verbrennungsmotor gekuppelt sein, wozu eine mechanische Verbindung, beispielsweise eine Kupplung elektrisch, mechanisch oder hydraulisch zuschaltbar sein kann. Eine starre Antriebsverbindung zwischen Verbrennungsmotor und Antriebseinheit ist nicht ausgeschlossen.

Solche Arbeitsmaschinen mit stufenloser Geschwindigkeitsregulierung und einer hydrostatisch angetriebenen Fahrachse werden über Lenkholme geführt und gelenkt. Die Fortbewegung nach den Seiten oder geradeaus wird durch die Kraft der Bedienungsperson bewirkt, oder durch Unterstützung einer Einzelradbremsvorrichtung mechanisch oder mittels hydrostatischer Lenkhilfe, beispielsweise einem sog. Lenkventil, welches den den Rädern zugeordneten Hydromotoren unterschiedliche bzw. gleiche Ölmengen zur Änderung der Fahrtrichtung zuführt.

Die Arbeitsmaschine kann durch ein an einem Lenkholm befestigtes Betätigungsorgan vorwärts oder rückwärts bewegt werden, wobei zwei vorgesehene Lenkholme einer Lenkanordnung an den einer Bedienungsperson zugewandten freien Enden Bedienungsgriffe aufweisen. An den von den Bedienungsgriffen abgewandten Enden der sich auslegerartig erstreckenden Lenkholme sind diese mit einem die Fahrachse aufweisenden Fahrgestell verbunden, wie beispielsweise in der WO 02/102647 A1 und der unveröffentlichten EP 11 405 217.8 offenbart.

An den auch Führungsholme genannten Lenkholmen sind an den der Bedienungsperson zugewandten Endbereichen verschiedene Betätigungsorgane zur Einstellung oder Änderung der Fortbewegungsrichtung oder Fortbewegungsgeschwindigkeit der Arbeitsmaschine, und gegebenenfalls den angebauten Arbeitsgeräte zugeordnete Einstell- resp. Verstellorgane befestigt.

Die Fahrachse der eingangs beschriebenen Arbeitsmaschine könnte nach dem in der CH 696511 A5 offenbarten Prinzip ausgestattet sein, das zur Lenkung oder Führung der Arbeitsmaschine aus zwei jeweils seitlich des Fahrgestells angeordneten, die Fahrachse der Arbeitsmaschine bildenden Achsstummeln besteht, wobei jedem Achsstummel für den Radantrieb ein durch ein Ventil gesteuerter Hydraulikmotor zugeordnet ist.

Zu den erwähnten Verwendungszwecken eingesetzte Arbeitsmaschinen weisen aufgrund des universellen Einsatzes auch in Hanglagen resp. entlang von Hanglagen nicht zuletzt aufgrund ihres Maschinengewichtes eine gewisse Trägheit und Neigung zum seitlichen Kippen auf, die nur mit einer zusätzlichen hohen Kraftanstrengung durch die Bedienungsperson zu überwinden sind. Insbesondere das Lenken der Maschine an den Lenkholmen ist bezüglich Kraftaufwand sehr anspruchsvoll und nicht zuletzt zum Schutz gegen Unfälle und Schäden sind technische Verbesserungsmassnahmen gefragt.

Die vorveröffentlichte DE 10 2007 047 838 A1 vermittelt einen Antrieb für ein Flurförderzeug, mit einer verbesserten Eingabevorrichtung, welche zum einen dem Bedienungspersonal eine sehr feinfühlige Regelung des Flurförderzeuges gestattet und zum anderen die für die Erkennung der vorgegebenen Fahr- und Lenkbewegung notwendigen Verstellwege stark reduziert.

Es stellt sich die Aufgabe an die Erfindung, eine Arbeitsmaschine der eingangs beschriebenen Art zu schaffen, zu deren Betrieb eine hohe Arbeitssicherheit und Zuverlässigkeit der Funktionen für Mensch, Maschine und Umgebung gewährleistet wird, vornehmlich wenn die Arbeitsmaschine in schwer zugänglich und befahrbaren Gebieten, beispielsweise in steilen Hanglagen betrieben wird, wo die Bedienungsperson zu grosser Aufmerksamkeit und Ausdauer gefordert ist.

Erfindungsgemäss wird die Aufgabe dadurch gelöst, dass der Messwertnehmer durch einen nach der Dehnungsrichtung des Lenkholmes ausgerichteten Dehnungsmessstreifen an dem Lenkholm befestigt ist.

Diese Massnahme dient der Schonung der Bedienungsperson sowie der Minderung des Unfall- und Schadenrisikos und begünstigt die Arbeitssicherheit und Manövrierbarkeit mit der Arbeitsmaschine.

Die Verwendung eines Messwertgebers an Lenkholmen einer Arbeitsmaschine zu deren Lenkung nach der Lösungsdefinition vermittelt einen erfinderischen Überraschungseffekt.

Die Erfindung zeichnet sich dadurch aus dass bei einer Arbeitsmaschine mit einer Räder der Fahrachse hydraulisch antreibenden Antriebseinheit, welche Arbeitsmaschine jeweils den Rädern zugeordnete Hydraulikmotor-en und eine mit der Steuervorrichtung und letzteren steuerbar verbundene Hydraulikpumpe aufweist, der Messwertgeber durch einen nach der Verformung des Lenkholms ausgerichteten Dehnmessstreifen an dem Lenkholm befestigt ist. Dehnmessstreifen ändern schon bei geringen Verformungen ihren elektrischen Widerstand und bilden den Kern von Kraftaufnehmern, Waagen, Druckaufnehmern, Drehmomentaufnehmern, Spannungsmessungen von Werkstoffen und Bauteilen. Dehnmessstreifen werden zur Erfassung von Formänderungen (Dehnungen/ Stauchungen) an der Oberfläche von Bauteilen eingesetzt.

Vorteilhaft ist ein Dehnmessstreifen in einem Endbereich eines Lenkholms befestigt, da durch die manuelle Führung der Arbeitsmaschine in diesen Bereichen wirkungsvolle Aktions- und Reaktionskräfte auftreten.

Vorzugsweise ist der an dem Lenkholm befestigte, als Dehnmessstreifen ausgebildete Messwertnehmer durch Anschlüsse einer elektrischen Schaltung mit der Steuervorrichtung verbunden.

Ein klassischer Dehnmessstreifen weist ein auf eine aus Acrylharz, Epoxiharz oder Phenolharz gebildete Kunststofffolie kaschiertes Messgitter aus Widerstandsdraht von 3 bis 8 µm Dicke auf. Oft haben solche Dehnmessstreifen auf der Oberseite eine zweite dünne Kunststoffschicht, die mit der tragenden Folie verklebt ist und das Messgitter mechanisch schützt. Die Messgitter können aus einem mäanderförmig oder schuppenartig verlegten Widerstandsdraht gebildet sein und das Messgitter kann prinzipiell aus Metallen oder Halbleitern (Silizium) bestehen.
Metallische Dehnmessstreifen basieren auf der Änderung des Widerstandes durch Längen- und Querschnittsänderung. Wird der Messstreifen gedehnt, nimmt sein elektrischer Widerstand zu. Wird er gestaucht, nimmt sein elektrischer Widerstand ab.
D.h. funktionell, dass die Dehnmessstreifen vollflächig auf den Lenkholm aufgeklebt sind. Die Formänderungen des Lenkholms während dem Betrieb der Arbeitsmaschine werden auf den Dehnmessstreifen übertragen und es tritt eine elektrische Widerstandsänderung ein.

Die Dehnbarkeit eines Dehnmessstreifens hängt von der Dehnbarkeit des Messgitters, des Klebstoffes und/oder dem Werkstoff des Trägermaterials des Messgitters ab.

Als geeignet erweist es sich, wenn die elektrische Schaltung als Brückenschaltung mit der Steuervorrichtung verbunden ist. Hierzu erweist sich eine wheatstone'sche Brücke als vorteilhaft, wobei die Änderung des Widerstandes als Spannungssignal einem Verstärker zugeführt werden kann. Ausführlichere Informationen zur Verwendung und Funktion von Dehnmessstreifen vermitteln u.a. "Eine Einführung in die Technik zu Dehnmessstreifen", Karl Hoffmann, 1987; Normen und Richtlinien des VDI und P. Giesecke: "Dehnungsmessstreifentechnik", 1994.

Zur Messwertaufnahme kann die Steuervorrichtung an eine mit der elektrischen Schaltung verbundene elektrische Stromquelle angeschlossen sein.

Nachfolgend wird die Erfindung unter Bezugnahme auf den zitierten resp. den zitierenden Stand der Technik und die Zeichnung, auf die bezüglich aller in der Beschreibung nicht näher erwähnten Einzelheiten verwiesen wird, anhand eines Ausführungsbeispiels erläutert. In der Zeichnung zeigen:
- Fig. 1: eine bekannte, einachsige Arbeitsmaschine,
- Fig. 2: eine auszugsweise, schematische Darstellung einer erfindungsgemässen Lenkanordnung der Arbeitsmaschine und
- Fig. 3: eine vergrösserte Darstellung eines Messwertaufnehmers.

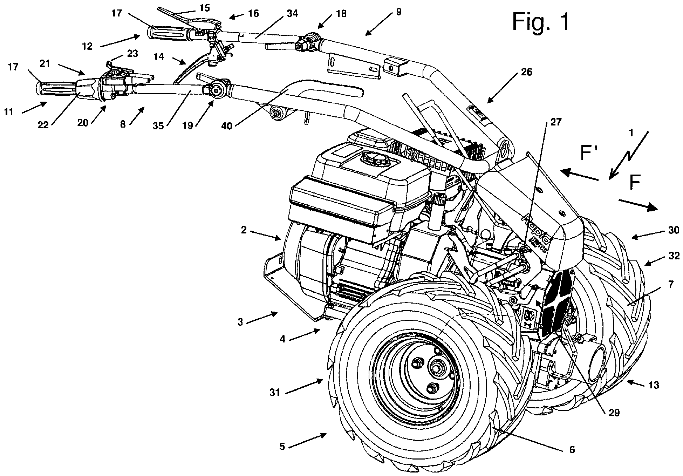

Fig. 1 zeigt eine moderne selbstfahrende, einachsige Arbeitsmaschine 1 zum Betreiben und Fortbewegen von front- und/oder heckseitig anbaubaren, zuschaltbaren Arbeitsgeräten (nicht ersichtlich), die eine mit einem Antriebsmotor, vorzugsweise einem Verbrennungsmotor 2 antriebsverbundene Antriebseinheit 3 aufweist, mit der die an einer mit einem Fahrgestell 4 verbundenen Fahrachse 5 befestigten Räder 6, 7 und die anbaubaren Arbeitsgeräte -bei Bedarf- mechanisch oder hydrostatisch antreibbar sind. Die Arbeitsmaschine 1 kann sowohl in Richtung F vorwärts als auch in die Gegenrichtung F' fortbewegt werden. Zur begleiteten Führung durch eine gehende Bedienungsperson oder Maschinenführer sind Lenkholme 8, 9 einer Lenkanordnung vorgesehen, die mit dem Fahrgestell 4, der beim Ausführungsbeispiel mit einer hydrostatischen Antriebseinheit 3 versehenen Arbeitsmaschine 1 verbunden sind. Die auslegerartig befestigten Lenkholme 8, 9 weisen an den freien, der Bedienungsperson zugewandten Enden Bedienungshandgriffe 11, 12 zur manuellen Führung, Lenkung und Betätigung der Arbeitsmaschine 1 auf. Das Lenken der Arbeitsmaschine erfolgt mittels hydrostatischer Vorrichtung über eine Steuervorrichtung 30, die Antriebseinheit 3 sowie den Rädern 6, 7 zugeordnete, von einer Pumpe versorgten Hydromotoren. An der Vorderseite weist die Arbeitsmaschine 1 eine zu- und abschaltbare, geschützte Zapfwelle 13 zur Koppelung mit den Antrieben anbaubarer Arbeitsgeräte auf. Der von der Bedienperson aus in Vorwärtsfahrtrichtung betrachtet linke Bedienungshandgriff 12 des Lenkholms 9 ist mit einem mittels linker Hand zu betätigenden Kupplungshebel 14 einer auf die Räder 6, 7 resp. die Fahrachse 5 wirkenden Feststellbremse 40 und einem Totmannhebel 15 einer Totmann-Schaltvorrichtung 16 ausgerüstet, die hier nicht näher beschrieben sind.
Fig. 1 veranschaulicht weiterhin an dem linken 9 und dem rechten Lenkholm 8 eine Verstellvorrichtung mit einem Klemmhebel 18 zur ergonomischen Anpassung der Lenkholme 8, 9 an die Körpermasse einer Bedienungsperson. Der andere, der rechten Hand der Bedienungsperson zugeordnete Bedienungshandgriff 11 ist durch eine weitere, mit der Antriebseinheit 3 oder dem Antriebsmotor 2 verbundene, gleichwirkende Totmann-Schaltvorrichtung 20 ausgebildet. Dieser Bedienungshandgriff 11 an dem Führungsorgan 8 ist insbesondere für ein zur Geschwindigkeitseinstellung oder -änderung der Arbeitsmaschine 1 vorgesehenes Betätigungsorgan 21 ausgebildet. Dieses Betätigungsorgan 21 weist vor dem mit einem Handgriff 17 versehenen Ende des Bedienungshandgriffs 11 einen Drehgriff 22 auf, mit dem die Fortbewegungsresp. Arbeitsgeschwindigkeit resp. Vor- F und Rückfahrbewegung F' einstell- und/oder verstellbar ist. Mittels eines Einstell- oder Gashebels 23 kann die Drehzahl des Antriebsmotors 2 eingestellt werden. Nach dem Anlassen mittels Seilzug oder batterieunterstützter Anlassvorrichtung wird die Motordrehzahl und die für die Anbaugeräte vorgesehene Drehzahl mit dem Einstellhebel 23 und die Fortbewegungsgeschwindigkeit über den Drehgriff 22 bestimmt.

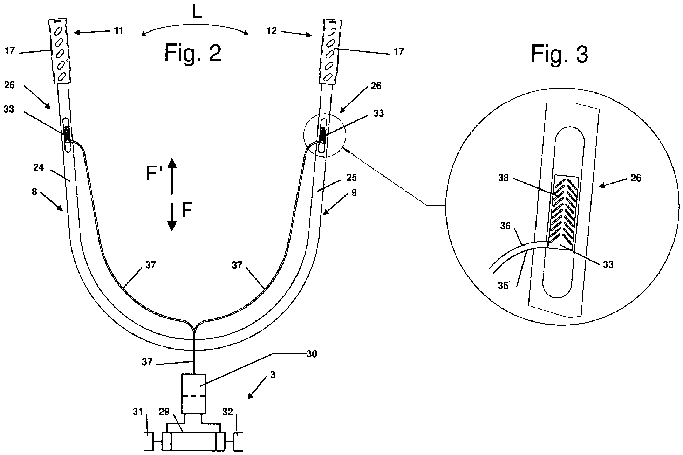

Die Fig. 2 zeigt in einer einfachen Darstellung eine aus zwei Lenkholmen 8, 9 gebildete Lenkanordnung für eine Arbeitsmaschine. Die einer Bedienungsperson zugewandten freien Enden der Lenkholme 8, 9 sind mit aufgeschobenem Handgriff 17 versehen. Diese Lenkholme 8, 9 sind aus einem annähernd halbkreisförmig geformten, beispielsweise rohrartigen Mittelstück mit daran anschliessenden gestreckten Lenkern 24, 25 gebildet. Die Lenkanordnung könnte jedoch nach der Darstellung in Fig. 1 oder durch zwei einzelne, mit dem Fahrgestell 4 der Arbeitsmaschine 1 verbundene Lenkholme 8, 9 ausgebildet sein.
Fig. 1 stellt eine Lenkanordnung dar, bei der wenigstens ein Lenkholm 8, 9 im Auslegerbereich einen auf die bei lenkweise manueller Führung der Arbeitsmaschine 1 an dem Lenkholm 8, 9 auftretenden Verformung ansprechender Messwertnehmer 26 vorgesehen ist, der zur Übertragung des gemessenen Verformungswertes an dem Lenkholm 8 und/oder 9 mit einer einen Messwertgeber (nicht sichtbar) aufweisenden Steuervorrichtung 30 zur Verstellung der Antriebseinheit 3 resp. zur Änderung der Fortbewegungs- bzw. Fahrrichtung der Arbeitsmaschine 1 verbunden ist. Der Auslegerbereich resp. die Lenkholme 8, 9 erstrecken sich jeweils von der Befestigungsstelle an der Maschine bis zu den Bedienungsholmen 11, 12.
Zur Steuerung der Antriebseinheit bzw. der den Rädern 6, 7 der Fahrachse 5 zugeordneten, ansteuerbaren Hydraulikmotoren 31, 32 kann das Signal des Messwertnehmers 26 an die Steuervorrichtung 30 über einen Verstärker weitergeführt werden.
Die nach Fig. 1 dargestellte Arbeitsmaschine 1 weist eine die Räder 6, 7 an der Fahrachse 5 antreibende hydrostatische Antriebseinheit 3 auf, welche jeweils den Rädern 6, 7 zugeordnete Hydraulikmotoren resp. Antriebsmotoren 31, 32 und mit der Steuervorrichtung 30 und letzteren förderwirksam verbundene Hydraulikpumpe 29 aufweist, wobei zwischen Hydraulikpumpe 29 und den leitungsverbundenen Antriebsmotoren 31, 32 ein mit der Steuervorrichtung 30 über Stellglieder gesteuertes Hydraulikventil 27 angeordnet ist. Die Steuervorrichtung 30 wiederum ist mit einem Nehmerteil und einem Geberteil für die Signalübertragung ausgestattet. Hierbei ist der in Fig. 3 dargestellte Messwertnehmer 26 durch einen nach Dehnungs- bzw. Beanspruchungsrichtung des Lenkholms 8, 9 ausgerichteten Dehnmessstreifen 33 an dem Lenkholm 8, 9 befestigt.
Der/die Dehnmessstreifen 33 ist/sind nach Fig. 2 an dem gestreckten Abschnitt der Lenkholme 8, 9 befestigt, oder, wie schon erwähnt, im Näherungsbereich der Befestigung der Lenkholme 8, 9 am Fahrgestell 4 der Arbeitsmaschine 1, oder in der Nähe des Bedienungshandgriffes 11, 12 vor oder hinter einer Verstellvorrichtung 19 zur Einstellung eines der Bedienungsperson zugewandten Endstückes 34, 35 der Lenkholme 8, 9, oder an der Verstellvorrichtung 19 selbst befestigt.
Der aus einem Dehnmessstreifen 33 gebildete Messwertnehmer 26 weist Anschlüsse 36, 36' einer elektrischen Schaltung (nicht ersichtlich) auf, die mit der Steuervorrichtung 30 verbunden bzw. in diese integriert ist.

Die elektrische Schaltung ist mit einer Brückenschaltung, beispielsweise einer wheatstone'schen Brücke versehen, die verschiedene Schaltungsarten bzw. den Einsatz mehrerer Dehnmessstreifen ermöglicht.

Selbstverständlich ist die Steuervorrichtung 30 an eine elektrische Stromquelle, beispielsweise einen Akku resp. eine Batterie oder einen mit dem Verbrennungsmotor gekuppelten Alternator angeschlossen, mit der der Messwertnehmer 26 bzw. die Dehnmessstreifen mit Strom versorgt werden, um die Dehnung an dem/den Lenkholmen 8, 9 zu messen und den gemessenen bzw. geänderten Widerstandswert an den Messwertgeber der Steuervorrichtung 30 übertragen zu können.

Wie Fig. 2 zeigt, sind an beiden Lenkholmen 8, 9 Messwertnehmer 26 befestigt und über Kabel 37 mit der Steuervorrichtung 30 elektrisch verbunden. Die Kabel sind zum Teil innerhalb der Lenkholme 8, 9 geführt.

Bei dem in Fig. 3 dargestellten Dehnmessstreifen 33 handelt es sich um eine Messgitterfolie, bei der der beispielsweise mäanderartig ausgelegte Widerstandsdraht 38 auf einen dünnen Kunststoffträger kaschiert, ausgeätzt und mit elektrischen Anschlüssen 36, 36' versehen ist. Es können auch mehrere Dehnmessstreifen rosettenförmig übereinander an einem Lenkholm 8, 9 befestigt werden, wozu sich eine in die Schaltung eingeschlossene wheatstone'sche Brücke ganz besonders eignet. Der Dehnmessstreifen wiederum könnte in eine Vertiefung am Lenkholm 8, 9 eingelegt bzw. eingeklebt sein.

## Patentansprüche

1. Selbstfahrende, wenigstens einachsig ausgebildete Arbeitsmaschine (1) zum Betreiben und/oder Fortbewegen von angebauten Arbeitsgeräten und angehängten Fahrzeugen, welche Arbeitsmaschine (1) eine mit einem Verbrennungsmotor (2) antriebsverbundene, hydrostatische Antriebseinheit (3) aufweist und vorzugsweise von einer Vorwärts- in eine Rückwärtsfortbewegungsrichtung umschaltbar ist, und die zur manuellen Führung eine aus zwei, jeweils einer Hand einer Bedienungsperson zugeordnete, letzterer zugewandte, an den freien Enden von auslegerartig angeordneten Lenkholmen (8, 9) einer Lenkanordnung befestigte Bedienungshandgriffe (11, 12) aufweist, wobei die Lenkholme (8, 9) jeweils an den von den Bedienungshandgriffen (11, 12) abgewandten Enden mit einem eine quer zur Fortbewegungsrichtung (F, F') angeordnete Fahrachse (5) aufweisenden Fahrgestell (4) verbunden sind, und wobei wenigstens einer der mit dem Fahrgestell (4) verbundenen Lenkholme (8, 9) im Auslegerbereich einen auf die bei der manuell lenkweisen Führung der Arbeitsmaschine (1) an den Lenkholmen (8, 9) auftretenden Verformung ansprechenden Messwertnehmer (26) aufweist, der zur Übertragung des gemessenen Verformungswertes mit einer einen Messwertgeber aufweisenden Steuervorrichtung (30) zur Verstellung der Antriebseinheit (3) zur Änderung der Fortbewegungsrichtung der Arbeitsmaschine (1) verbunden ist, wobei die Arbeitsmaschine eine Räder (6, 7) der Fahrachse (5) hydraulisch antreibende Antriebseinheit (3) mit den Rädern (6, 7) jeweils zugeordnete Hydraulikmotoren (31, 32) und eine mit der Steuervorrichtung (30) und letzteren durch ein Stellglied steuerbar verbundene Hydraulikpumpe (29) aufweist, und wobei der Messwertnehmer durch einen nach der Dehnungsrichtung des Lenkholmes (8, 9) ausgerichteten Dehnungsmessstreifen (33) an dem Lenkholm (8, 9) befestigt ist.

2. Arbeitsmachine nach Anspruch 1, **dadurch gekennzeichnet, dass** ein Dehnmessstreifen (33) in einem Endbereich eines Lenkholms (8, 9) befestigt ist.

3. Arbeitsmaschine nach Anspruch 1 oder 2, bei der wenigstens ein Lenkholm (8, 9) zur Einstellung eines der Bedienungsperson zugewandten, mittels Verstellvorrichtung (19) einstellbaren Endstücks (34, 35) des Lenkholms (8, 9) aufweist, **dadurch gekennzeichnet, dass** der Messwertnehmer (26) in Fahrtrichtung betrachtet vor oder hinter der Verstellvorrichtung (18, 19) oder an dieser befestigt ist.

4. Arbeitsmaschine nach einem der Ansprüche 1 bis **3, dadurch gekennzeichnet, dass** der an dem Lenkholm (8, 9) befestigte Messwertnehmer (26) einen Dehnungsmessstreifen (33) aufweist, der durch Anschlüsse (36, 36') einer elektrischen Schaltung mit der Steuervorrichtung (30) verbunden ist.

5. Arbeitsmaschine nach Anspruch **4, dadurch gekennzeichnet, dass** die elektrische Schaltung als Brückenschaltung mit der Steuervorrichtung (30) verbunden ist.

6. Arbeitsmaschine nach Anspruch **4** oder **5, dadurch gekennzeichnet, dass** die Steuervorrichtung (30) eine mit der elektrischen Schaltung verbundene Stromquelle aufweist.

7. Arbeitsmaschine nach einem der Ansprüche 1 bis **6, dadurch gekennzeichnet, dass** an beiden Lenkholmen (8, 9) ein mit der Steuervorrichtung (30) verbundener Messwertnehmer (26) resp. Dehnmessstreifen (33) befestigt ist.

## Claims

1. Self-propelled, at least single-axle working machine (1) for driving and/or moving mounted implements and attached vehicles, which working machine (1) comprises a hydrostatic drive unit (3) operatively connected to an internal combustion engine (2) and can preferably be switched over from a forward to a backward direction of movement, and for manual guiding comprises two operating handles (11, 12) each associated with one hand of an operator, directed towards the latter, and secured to the free ends of cantilevered steering bars (8, 9) of a steering arrangement, wherein the steering bars (8, 9) are each connected at the ends directed away from the operating handles (11, 12) to a chassis (4) comprising an axle (5) arranged transversely to the direction of movement (F, F') and wherein at least one of the steering bars (8, 9) connected to the chassis (4) is provided in the region of the cantilever with a sensor (26) responding to the deformation occurring at the steering bars (8, 9) when the working machine (1) is guided by means of manual steering, which sensor (26), for the transmission of the measured deformation value, is connected to a control device (30) comprising a transmitter in order to displace the drive unit (3) in order to change the direction of movement of the working machine (1), wherein the working machine comprises a drive unit (3) hydraulically driving wheels (6, 7) of the axle (5), with respective hydraulic motors (31, 32) associated with the wheels (6, 7), and a hydraulic pump (29) controllably connected to the control device (30) and to the hydraulic motors by means of a control element, and wherein the sensor is secured to the steering bar (8, 9) by means of a strain gauge (33) oriented in the direction of strain of the steering bar (8, 9).

2. Working machine according to claim 1, **characterised in that** a strain gauge (33) is secured in an end region of a steering bar (8, 9).

3. Working machine according to claim 1 or claim 2, in which at least one steering bar (8, 9) comprises a displacement device (19) for adjusting an adjustable end piece (34, 35) of the steering bar (8, 9) directed towards the operator, **characterised in that** the sensor (26) is disposed upstream or downstream of the displacement device (18, 19) as viewed in the direction of travel or is secured thereto.

4. Working machine according to one of claims 1 to 3, **characterised in that** the sensor (26) secured to the steering bar (8, 9) comprises a strain gauge (33) connected to the control device (30) by means of terminals (36, 36') of an electrical circuit.

5. Working machine according to claim 4, **characterised in that** the electrical circuit is connected to the control device (30) as a bridge circuit.

6. Working machine according to claim 4 or claim 5, **characterised in that** the control device (30) comprises a power source connected to the electrical circuit.

7. Working machine according to one of claims 1 to 6, **characterised in that** a sensor (26) or strain gauge (33) connected to the control device (30) is secured to both steering bars (8, 9).

## Revendications

1. Machine de travail automotrice (1), réalisée avec au moins un essieu, pour l'entraînement et/ou le déplacement d'engins de travail raccordés et de véhicules remorqués, laquelle machine de travail (1) présente une unité d'entraînement hydrostatique (3) connectée par entraînement à un moteur à combustion interne (2) et peut être commutée de préférence d'une direction de déplacement vers l'avant dans une direction de déplacement vers l'arrière, et présente, pour le guidage manuel, une parmi deux poignées de commande (11, 12) associées à chaque fois à une main d'un opérateur, tournée vers ce dernier, fixée aux extrémités libres de mancherons (8, 9) d'un système de direction disposés en forme de bras de potence, les mancherons (8, 9) étant à chaque fois connectés, aux extrémités opposées aux poignées de commande (11, 12), à un châssis (4) présentant un essieu (5) disposé transversalement par rapport à la direction de déplacement vers l'avant (F, F') et au moins l'un des mancherons (8, 9) connectés au châssis (4) présentant, dans la région des bras de potence, un capteur de valeurs de mesure (26) réagissant à la déformation se produisant au niveau des mancherons (8, 9) lors du guidage manuel de direction de la machine de travail (1), lequel capteur de valeurs de mesure est connecté pour le transfert de la valeur de déformation mesurée à un dispositif de commande (30) présentant un transducteur de valeurs de mesure pour le réglage de l'unité d'entraînement (3) en vue de modifier la direction du déplacement vers l'avant de la machine de travail (1), la machine de travail présentant une unité d'entraînement (3) entraînant hydrauliquement des roues (6, 7) de l'essieu (5) avec des moteurs hydrauliques (31, 32) à chaque fois associés aux roues (6, 7) et une pompe hydraulique (29) connectée de manière commandable au dispositif de commande (30) et à ces derniers par un actionneur, et le capteur de valeurs de mesure étant fixé au mancheron (8, 9) par une jauge extensométrique (33) orientée dans la direction d'extension du mancheron (8, 9).

2. Machine de travail selon la revendication 1, **caractérisée en ce qu'**une jauge extensométrique (33) est fixée dans une région d'extrémité d'un mancheron (8, 9).

3. Machine de travail selon la revendication 1 ou 2, dans laquelle au moins un mancheron (8, 9) présente, pour l'ajustement d'une pièce de bout (34, 35) du mancheron (8, 9) tournée vers l'opérateur, pouvant être ajustée au moyen du dispositif de réglage (19), **caractérisée en ce que** le capteur de valeurs de mesure (26), vu dans la direction de conduite, est fixé avant ou derrière le dispositif de réglage (18, 19) ou est fixé sur celui-ci.

4. Machine de travail selon l'une quelconque des revendications 1 à 3, **caractérisée en ce que** le capteur de valeurs de mesure (26) fixé au mancheron (8, 9) présente une jauge extensométrique (33) qui est connectée par des raccords (36, 36') d'un circuit électrique au dispositif de commande (30).

5. Machine de travail selon la revendication 4, **caractérisée en ce que** le circuit électrique est connecté sous forme de circuit en pont au dispositif de commande (30).

6. Machine de travail selon la revendication 4 ou 5, **caractérisée en ce que** le dispositif de commande (30) présente une source de courant connectée au circuit électrique.

7. Machine de travail selon l'une quelconque des revendications 1 à 6, **caractérisée en ce qu'**un capteur de valeurs de mesure (26), respectivement une jauge extensométrique (33) connecté(e) au dispositif de commande (30) est fixé(e) aux deux mancherons (8, 9).
